# EUROPÄISCHE PATENTSCHRIFT

(11) **EP 2 001 693 B1**
(45) Veröffentlichungstag und Bekanntmachung des Hinweises auf die Patenterteilung: **17.03.2010**
(21) Anmeldenummer: 07722178.6
(22) Anmeldetag: 05.04.2007
(51) Int. Cl.: B60J 3/02

(54) **SONNENBLENDSCHUTZVORRICHTUNG FÜR KRAFTFAHRZEUGE**
ANTI-DAZZLE SUN VISOR FOR MOTOR VEHICLES
DISPOSITIF DE PROTECTION PARE-SOLEIL DE VÉHICULES À MOTEUR

(30) Priorität: 06.04.2006 FR 0603015
(43) Veröffentlichungstag der Anmeldung: 17.12.2008
(73) Patentinhaber: Webasto AG, 82131 Stockdorf (DE)
(72) Erfinder: BAUDOUIN, Jacky, 13100 Aix-En-Provence (FR)
(86) Internationale Anmeldenummer: PCT/DE2007/000620
(87) Internationale Veröffentlichungsnummer: WO 2007/112735

(56) Entgegenhaltungen:
- FR-A1- 2 827 226
- FR-A3- 2 705 397
- US-A- 5 031 952

## Beschreibung

Die vorliegende Erfindung betrifft eine für den Einsatz im oberen Teil einer Windschutzscheibe eines Kraftfahrzeuges bestimmte Sonnenblendschutzvorrichtung.

Die Erfindung findet eine besonders vorteilhafte, aber nicht ausschließliche Anwendung auf dem Gebiet von Fahrzeugen, die mit sich bis oberhalb der Vordersitze erstreckenden Windschutzscheiben ausgestattet sind.

Dokument US-A-5,031,952 offenbart eine Sonnenblendschutzvorrichtung die dazu bestimmt ist, im oberen Teil einer Windschutzscheibe eines Kraftfahrzeuges montiert zu werden.

Auf dem Gebiet der Kraftfahrzeuge ist es an sich bekannt, Sonnenblendschutzvorrichtungen im Bereich des oberen Teils einer Windschutzscheibe zu verwenden, um sich vor zu intensiven Lichtquellen zu schützen. Insbesondere wird hier an direkte Sonneneinstrahlung, aber auch an die Blendung durch Scheinwerfer anderer Verkehrsteilnehmer gedacht.

Das Prinzip besteht darin, zwischen den Augen jedes vorderen Insassen des Fahrzeuges und der betreffenden Lichtquelle einen Schirm anzuordnen, wobei der genannte Schirm idealerweise direkt oberhalb des von dem genannten Insassen effektiv genutzten Sichtfeldes positioniert werden muss. Die Aufgabe besteht natürlich darin, die Blendungsrisiken zu begrenzen, welche geeignet sind, den Fahrer abzulenken und/oder Mitfahrer zu stören.

Heutzutage bestehen die eingesetzten Sonnenblendschutzvorrichtungen üblicherweise aus lichtundurchlässigen Schirmen, die im Bereich des Dachhimmels des Fahrzeuges angelenkt sind, so dass sie im Bereich des oberen Teils der Windschutzscheibe hauptsächlich nach vorne und gegebenenfalls im Bereich des oberen Teils einer vorderen Seitenscheibe entsprechend seitlich ausgerichtet werden können.

In der Praxis ist ein Kraftfahrzeug im Allgemeinen mit zwei Schirmen versehen, die an den beiden seitlichen Enden der Innenausstattung angeordnet sind, die den Dachhimmel auskleidet, und die jeweils in der Lage sind, sich beiderseits des Innenrückspiegels befindende Teile der Windschutzscheibe abzudunkeln. Im Übrigen weist jeder Schirm im Allgemeinen eine auf ungefähr zehn Zentimeter begrenzte Höhe und eine Breite auf, die im Wesentlichen der Hälfte der Windschutzscheibe entspricht.

Wenn davon ausgegangen wird, dass nur die Hauptfunktion, d.h. also die Abdunkelung des oberen Teils der Windschutzscheibe, wesentlich ist, dann wird jeder Schirm üblicherweise für eine horizontale Schwenkbewegung zwischen einerseits einer passiven Position, in der er flach an der Innenauskleidung des Fahrzeuges angeordnet ist, und andererseits einer aktiven Position, in der er sich in mehr oder weniger parallel zum oberen Teil der Windschutzscheibe erstreckt, beweglich montiert.

Diese Art Sonnenblendschutzvorrichtung hat jedoch den Nachteil, dass sie für Windschutzscheiben von großer Höhe und insbesondere diejenigen besonders schlecht geeignet ist, die sich in den Dachhimmel bis oberhalb der Vordersitze erstrecken. Aufgrund ihrer großen Abmessungen sind solche Glasflächen in der Tat insbesondere im oberen Bereich den Lichtstrahlen besonders ausgesetzt. Es ist demzufolge unerlässlich, über ausreichend hohe Schirme zu verfügen, um gegebenenfalls relativ große Teile von Windschutzscheiben abdunkeln zu können.

Überdimensionierte Schirme erweisen sich aber als besonders schwierig zu bedienen, weil ihre Abmessungen übermäßig groß sind, was einen entsprechenden Raum insbesondere für die Kippbewegungen erfordert. Aufgrund der Ausgestaltung des Innenraums und/oder der Körpergröße des Anwenders kann dieser wesentliche Nachteil sogar unüberwindlich werden, wenn die Bewegung des Schirms eine Bewegung des Kopfes des genannten Anwenders erfordert.

Wenn auch Schirme mit großen Abmessungen für Nutzfahrzeuge akzeptabel sind, sind sie außerdem deshalb gleichwohl unästhetisch und also für Personenkraftwagen vom Typ Monospace und/oder Freizeitfahrzeuge wenig geeignet. Hier wird eine Problematik angetroffen, die weitgehend dem Problem der Außenspiegel entspricht.

Somit besteht das durch den Gegenstand der vorliegenden Erfindung zu lösende Problem darin, eine Sonnenblendschutzvorrichtung vorzuschlagen, die dazu bestimmt ist, im oberen Teil einer Windschutzscheibe eines Kraftfahrzeuges eingesetzt zu werden, wobei die genannte Sonnenblendschutzvorrichtung es erlauben würde, die Probleme nach dem Stand der Technik zu vermeiden, indem insbesondere in der Praxis ein wesentlich verbesserter Komfort bei der Verwendung geboten wird und gleichzeitig ein ästhetisch vorteilhaftes Design ermöglicht wird.

Die Lösung des gestellten technischen Problems besteht erfindungsgemäß darin, dass die Sonnenblendschutzvorrichtung einen Schirm aufweist, der an einer längs der Windschutzscheibe für die Verschiebung beweglich montierten Aufhängung angelenkt ist, sowie einen Vorhang, welcher geeignet ist, unterhalb eines als abdunkelbar bezeichneten, sich zwischen der beweglichen Aufhängung und der Oberkante der genannten Windschutzscheibe erstreckenden Teils der Windschutzscheibe ausgefahren zu werden.

In besonders vorteilhafter Weise ermöglicht es die Beweglichkeit der Aufhängung, bestmöglich die Position des Schirms längs der Windschutzscheibe der Höhe nach einzustellen, während der Vorhang es ermöglicht, den sich darüber erstreckenden Teil der Windschutzscheibe zu kaschieren. Die Beweglichkeit des Schirms ermöglicht es entsprechend, die Verdunkelungswirkung der Sonnenblendschutzvorrichtung präzise einzustellen.

Es versteht sich, dass der Schirm in absolut beliebiger Weise ausgebildet werden kann, insbesondere hinsichtlich der Struktur und/oder der Form und/oder der Abmessungen.

Das gleiche gilt für den Vorhang, wobei dieser im Übrigen gleichermaßen mehrere Positionen einnehmen kann oder nicht, über einen Motorantrieb verfügen kann oder nicht, in beliebiger Weise und insbesondere durch Aufrollen oder Falten aufgenommen werden kann.

Die Tatsache, dass der Schirm Gelenke aufweist, bedeutet einfach, dass er geeignet ist, in eine Vielzahl von unterschiedlichen Positionen gebracht zu werden, die sich in den drei Dimensionen des Raumes erstrecken können.

Die so definierte Erfindung bietet den Vorteil, für Windschutzscheiben großer Höhe perfekt geeignet zu sein.

Indem die Fähigkeit der Abdunkelung eines Schirms mit derjenigen eines Vorhangs kombiniert wird, ist eine solche Sonnenblendschutzvorrichtung in der Tat in der Lage, eine große Fläche im oberen Teil der Windschutzscheibe abzudecken.

Die Beweglichkeit der Aufhängung des Schirms ermöglicht ihrerseits eine präzise Einstellung der Größe der Sonnenblendschutzvorrichtung als Funktion der relativen Position der jeweiligen Lichtquelle relativ zu den Augen des Verwenders.

Das Vorhandensein des Vorhangs ermöglicht es im Übrigen, einen Schirm mit begrenzter Höhe einzusetzen, d.h. also einen Schirm, dessen Handhabung es nicht erfordert, den im Innenraum verfügbaren Raum übermäßig in Anspruch zu nehmen, was den Komfort der Fahrzeuginsassen steigert.

Schließlich bedeutet der verminderte Platzbedarf der Sonnenblendschutzvorrichtung sowohl in der ausgefahrenen Position als auch in der Aufnahmeposition vom rein ästhetischen Standpunkt für die Gesamtheit einen bedeutenden Vorteil.

Die vorliegende Erfindung betrifft auch Merkmale, die sich im Laufe der vorliegenden Beschreibung ergeben und die jeweils getrennt oder mit ihren sämtlichen möglichen technischen Kombinationen in Betracht zu ziehen sind.

Die genannte Beschreibung wird als nicht einschränkendes Beispiel gegeben und ist dazu bestimmt, besser verständlich zu machen, woraus die Erfindung besteht und wie sie ausgeführt werden kann. Im Übrigen wird Bezug auf die beigefügten Zeichnungen genommen, in denen
Fig. 1 in der Perspektive von oben eine Sonnenblendschutzvorrichtung nach einer ersten Ausführungsform der Erfindung zeigt;
Fig. 2 die Struktur der Sonnenblendschutzvorrichtung nach Fig. 1 detaillierter zeigt;
Fig. 3 eine perspektivische Ansicht von oben einer Sonnenblende eines Kraftfahrzeuges zeigt, die mit zwei Sonnenblendschutzvorrichtungen nach den Figuren 1 und 2 versehen ist; jede Sonnenblendschutzvorrichtung wird hier jeweils im ausgefahrenen Zustand gezeigt;
Fig. 4 eine ähnliche Ansicht zu Fig. 3 darstellt, jedoch mit gefalteten Sonnenblendschutzvorrichtungen;
Fig. 5 eine zu Fig. 4 analoge Ansicht ist, jedoch in der Perspektive von unten;
Fig. 6 in der Perspektive von oben eine Sonnenblendschutzvorrichtung nach einer zweiten Ausführungsform der Erfindung zeigt;
Fig. 7 die Struktur der Sonnenblendschutzvorrichtung nach Fig. 6 detaillierter zeigt;
Fig. 8 ein Schema zeigt, das die Funktion der Sonnenblendschutzvorrichtung nach den Figuren 6 und 7 illustriert;
Fig. 9 eine perspektivische Ansicht von oben einer Sonnenblende eines Kraftfahrzeuges ist, die mit zwei Sonnenblendschutzvorrichtungen nach den Figuren 6 bis 8 versehen ist; die genannten Sonnenblendschutzvorrichtungen werden jeweils in vollständig zusammengefaltetem und vollständig ausgefahrenem Zustand gezeigt;
Fig. 10 eine zur Fig. 9 ähnliche Ansicht ist, jedoch mit den beiden teilweise eingesetzten Sonnenblendschutzvorrichtungen;
Fig. 11 eine Unteransicht der Windschutzscheibe nach den Figuren 9 und 10 mit vollständig zusammengefalteten Sonnenblendschutzvorrichtungen zeigt;
Fig. 12 eine zur Fig. 11 ähnliche Darstellung ist, jedoch mit den beiden teilweise eingefahrenen Sonnenblendschutzvorrichtungen.

Aus Übersichtlichkeitsgründen werden die gleichen Bauteile mit identischen Bezugszeichen bezeichnet. Darüber hinaus wurden lediglich die für das Verständnis der Erfindung wesentlichen Bauteile dargestellt, und zwar jeweils ohne Einhaltung von Maßstäben und in schematischer Form.

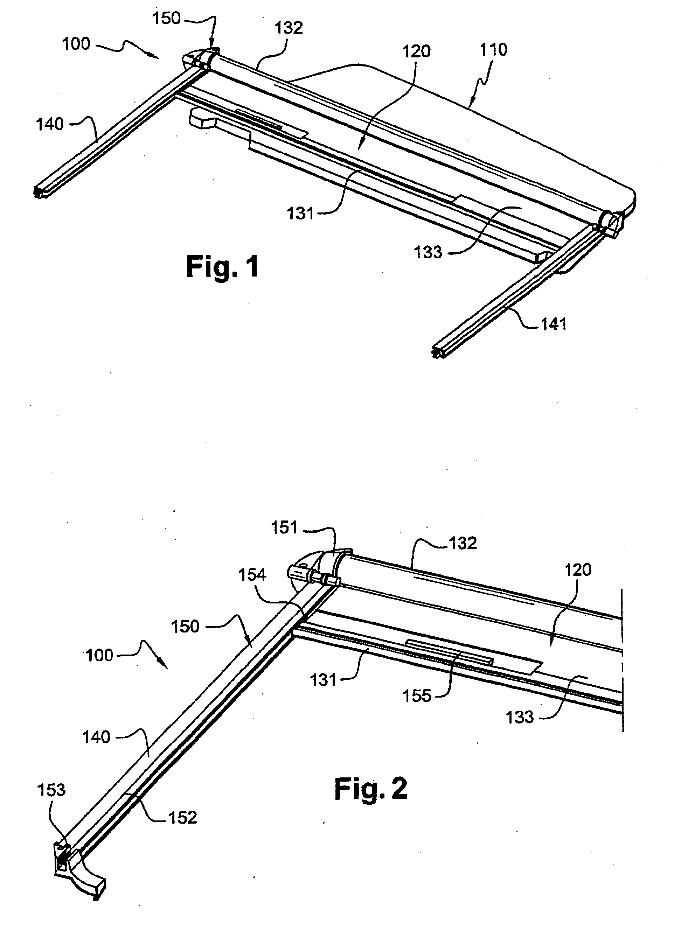

Die Figuren 1 und 2 zeigen eine Sonnenblendschutzvorrichtung 100, die dazu bestimmt ist, im oberen Teil einer Windschutzscheibe 10 eines Kraftfahrzeuges 1 montiert zu werden, um von innerhalb des Innenraums durch mindestens einen Insassen auf den Vordersitzen bedient werden zu können.

Entsprechend dem Gegenstand der vorliegenden Erfindung ist die genannte Sonnenblendschutzvorrichtung 100 mit einem Schirm 110 versehen, der an einer Aufhängung 120 angelenkt ist, die ihrerseits für die Verschiebung längs der Windschutzscheibe 10 beweglich montiert ist, sowie einem Vorhang 130, der unterhalb eines Teils der Windschutzscheibe 10 ausgefahren werden kann, der als zu verdunkelnder Teil 11 bezeichnet wird und sich zwischen der Aufhängung 120 und der Oberkante der genannten Windschutzscheibe 10 erstreckt.

Nach einem Erfindungsmerkmal ist der Vorhang 130 für die Verschiebung zwischen einer offenen Position, in der er in der Nähe des abzudunkelnden Teils 11 der Windschutzscheibe 10 aufgenommen wird, und einer geschlossenen Position, in der er sich unterhalb des genannten abzudunkelnden Teils 11 erstreckt, beweglich montiert.

Nach einer ersten Ausführungsform der Erfindung ist der Vorhang 130 in der offenen Position im Bereich eines festen Teils der Sonnenblendschutzvorrichtung 100, der einen Aufnahmebereich bildet, aufgenommen.

Es ist hier und im gesamten Beschreibungstext beabsichtigt, dass der Begriff des Aufnahmebereichs ebenso ein Bauteil als auch den Teil eines Bauteils betrifft, der integraler Bestandteil der Sonnenblendschutzvorrichtung 100 ist, oder ein Bauteil des Kraftfahrzeuges 1 oder ein Teil eines Bauteils, der als Aufhängung dient und somit indirekt Teil der Struktur der genannten Sonnenblendschutzvorrichtung 100 ist. Hinsichtlich der Teile des Kraftfahrzeuges 1 wird beispielsweise an ein Verstärkungselement der Karosserie gedacht, wie z. B. die obere Säule der Windschutzscheibe, oder an ein Innenausstattungsteil zur Verkleidung des Dachhimmels und sogar auch an die eigentliche Windschutzscheibe 10.

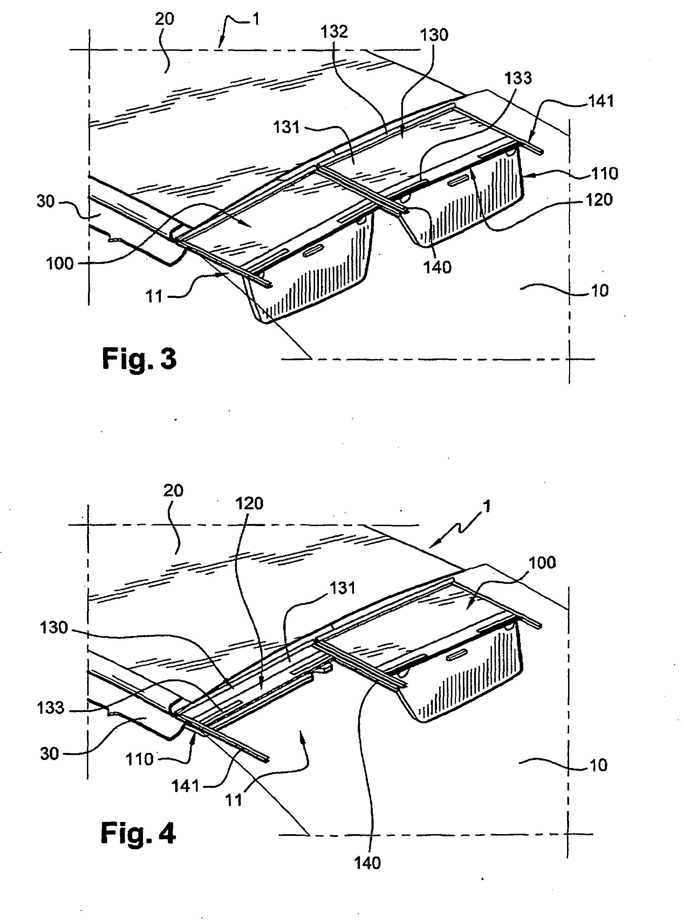

Nach einem vorteilhaften Merkmal der genannten ersten Ausführungsform, die in den Figuren 3 bis 5 zu sehen ist, ist der Aufnahmebereich der Sonnenblendschutzvorrichtung 100 dazu bestimmt, in der Nähe der Oberkante der Windschutzscheibe 10 positioniert zu werden.

Das Ziel ist, den Aufnahmebereich des Vorhangs 130 in optimaler Weise im Inneren des Fahrzeuges zu positionieren, d.h. also so nahe wie möglich an den abzudunkelnden Teil 11 der Windschutzscheibe 10. Eine solche Ausgestaltung ermöglicht es, die Länge des Vorhangs maximal zu begrenzen und somit den Platzbedarf der Sonnenblendschutzvorrichtung 100 in geöffneter Stellung. Das letztliche Ziel ist natürlich, den Raumkomfort des Kraftfahrzeuges 1 nicht zu beeinträchtigen.

Nach einem bei dieser ersten Ausführungsform vorliegenden Merkmal der Erfindung ist der Einsatz des Vorhangs 130 mit der Verschiebung der beweglichen Aufhängung 120 verbunden.

Bei dieser Art der Anordnung verbindet der Vorhang 130 den Aufnahmebereich mit der beweglichen Aufhängung 120 in kontinuierlicher Weise, d.h. also, dass er ständig einen Raum abdeckt, der sich zwischen der Oberkante der Windschutzscheibe 10 und dem den Schirm 110 tragenden Teil der Sonnenblendschuzvorrichtung 100 erstreckt. Da jedoch der Aufnahmebereich hier ortsfest ist, bedeutet dies, dass der Einsatz des Vorhangs 130 systematisch durch die Bewegung der beweglichen Aufhängung 120 längs der Windschutzscheibe 10 gesteuert wird.

Im Falle des in den Figuren 1 bis 5 dargestellten besonderen Beispiels ist das Ende des Vorhangs 130 fest mit der beweglichen Aufhängung 120 verbunden, da seine Aufnahme im Bereich eines festen Teils der Sonnenblendschutzvorrichtung 100, also hier dem Aufnahmebereich erfolgt. Entsprechend erfolgt das Ausfahren des Vorhangs 130 dann, wenn die bewegliche Aufhängung 120 von dem Aufnahmebereich entfernt wird, während sein Zusammenlegen dann erfolgt, wenn die bewegliche Aufhängung 120 an den genannten Aufnahmebereich angenähert wird.

Wenn dagegen entsprechend einer Erfindungsvariante der Vorhang 130 im Bereich der beweglichen Aufhängung 120 aufgenommen werden sollte, würde dies bedeuten, dass ein Ende des genannten Vorhangs 130 mit einem festen Teil der Sonnenblendschutzvorrichtung 100 fest verbunden ist.

Nach einem weiteren bei dieser ersten Ausführungsform benutzten Erfindungsmerkmal ist der Vorhang 130 so gestaltet, dass er eine Vielzahl von Positionen einnehmen kann.

Bei dieser besonderen, lediglich als Beispiel gewählten Ausführungsform besteht der Vorhang 130 konkret aus einer lichtdurchlässigen Leinwand 131, von der zwei gegenüberliegende Enden jeweils einerseits mit einem Aufrollrohr 132 fest verbunden sind, das in der Axialrotation in der Nähe des abzudunkelnden Teils 11 der Windschutzscheibe 10 beweglich montiert ist, und andererseits einer Zugstange 133, die ihrerseits für die Verschiebung längs des genannten abzudunkelnden Teils 11 beweglich montiert ist. Das Ganze ist so ausgestaltet, dass die Leinwand 131 in der geöffneten Position um das Aufrollrohr 132 aufgerollt ist (Figuren 1 und 2) und so, dass die genannte Leinwand 131 sich in geschlossener Position unterhalb des abzudunkelnden Teils 11 der Windschutzscheibe 10 erstreckt (Fig. 3).

Es ist anzumerken, dass bei diesem Ausführungsbeispiel die Zugstange 133 und die bewegliche Aufhängung 120 aufgrund der ständig bestehenden Koppelung bei der Verschiebung zwischen dem Vorhang 130 und der genannten beweglichen Aufhängung 120 lediglich ein und dasselbe Stück bilden.

Unabhängig davon ist die Sonnenblendschutzvorrichtung 100 jedoch mit Mitteln 150 versehen, die geeignet sind, die Bewegung der Zugstange 133 mit der Axialrotation des Aufrollrohrs 132 zu verbinden, wenn die Leinwand 131 für die Verschiebung zwischen der geöffneten Position und der geschlossenen Position angetrieben wird, um über mehrfache Positionierungsmöglichkeiten verfügen zu können.

Vom strukturellen Standpunkt aus bestehen die genannten Koppelungsmittel 150 schematisch aus einer Verbindung von kegelförmigen Rollen 151 und Antriebskabeln 152, die durch Umlenkrollen 153, 154 geführt werden.

Wie genauer in Fig. 3 zu sehen ist, trägt jedes Ende des Aufrollrohrs 132 eine kegelförmige Rolle 151, an der ein sich in der Richtung zum Vorderteil der Sonnenblendschutzvorrichtung 100 erstreckendes Antriebskabel 152 befestigt ist und sich darauf auf- oder davon abrollen kann. Jedes Antriebskabel 152 wird dann dank des Vorhandenseins einer ersten Umlenkrolle 153 zum Aufnahmebereich zurückgeführt, bevor es im rechten Winkel über eine zweite Umlenkrolle 154 in den Bereich der Zugstange 133 umgelenkt wird, an der es über eine Zugfeder 155 befestigt wird. Das genannte elastische Rückholmittel 155 hat in an sich bekannter Weise die Aufgabe, eventuelle Abweichungen zwischen der Verschiebungsdistanz der Zugstange 133 und der Abroll- oder Aufrolllänge der Leinwand 131 zu kompensieren und somit die genannte Leinwand 131 zwischen der genannten Zugstange 133 und dem Aufrollrohr 132 unter konstanter Spannung zu halten.

Solche Koppelungsmittel sind nach dem Stand der Technik an sich bekannt und werden hier in Bezug auf die Funktion nicht beschrieben.

Natürlich existiert eine Vielzahl von Mechanismen, die in der Lage sind, die Koppelungsfunktion, wie sie vorstehend beschrieben wurde, zu erfüllen. Aus diesem Grund können sämtliche bekannten Kopplungsmittel 150 im Prinzip in äquivalenter Weise im Rahmen der Erfindung genutzt werden.

Bei einem weiteren bei der genannten ersten Ausführungsform umgesetzten Erfindungsmerkmal wird die bewegliche Aufhängung 120 vorteilhafterweise längs zweier Führungsschienen 140, 141, die dazu bestimmt sind, beiderseits des abzudunkelnden Teils 11 der Windschutzscheibe 10 entsprechend den Figuren 3 bis 5 angeordnet zu werden, gleitend montiert.

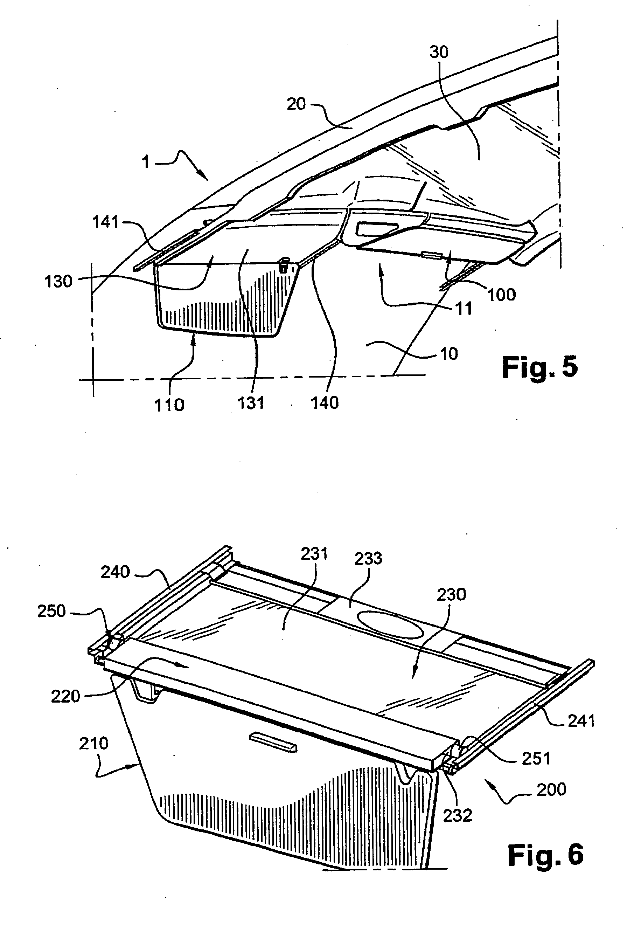

Nach einem weiteren bei der ersten Ausführungsform verwendeten und insbesondere in den Figuren 4 und 5 zu sehenden Erfindungsmerkmal ist der Schirm 110 für das Schwenken nach einerseits einer ersten, im Wesentlichen zur beweglichen Aufhängung 120 parallelen Achse und andererseits einer zweiten, im Wesentlichen zur genannten ersten Schwenkachse senkrechten Weise beweglich montiert.

Die erste Beweglichkeit ermöglicht die Ausrichtung des Schirms 110 nach vorne im Bereich des oberen Teils der Windschutzscheibe 10 oder ihn gegen die Innenverkleidung 30 des Dachhimmels 20 zum Zwecke der Aufnahme zu drücken. Die zweite Verschwenkbeweglichkeit ermöglicht ihrerseits ein Positionieren des Schirms 110 auf der Seite im Bereich des Oberteils der entsprechenden (nicht dargestellten) Seitenscheibe des Fahrzeuges 1.

Die Figuren 3 bis 5 zeigen verschiedene Beispiele der Ausgestaltung, die erhalten werden können, indem im Inneren eines Kraftfahrzeuges 1 zwei Sonnenblendschutzvorrichtungen 100 entsprechend der vorstehenden Beschreibung eingesetzt werden.

Fig. 3 zeigt die beiden Vorhänge 130 sowie die beiden Schirme 110 in der jeweils ausgefahrenen Position.

In dem zweiten Fall der Figuren 4 und 5 wird die rechte Sonnenblendschutzvorrichtung 100 (vom Inneren des Fahrgastraums aus gesehen) vollständig zusammengefaltet dargestellt, d.h. also, dass ihr Vorhang 130 in dem Aufnahmebereich aufgerollt ist, während ihr Schirm 110 parallel zum Dachhimmel 20 flach untergebracht ist.

Die Figuren 6 bis 8 zeigen eine Sonnenblendschutzvorrichtung 200, die einer zweiten Ausführungsform der Erfindung entspricht, aber gleichwohl auch dazu bestimmt ist, im oberen Teil einer Windschutzscheibe 11 eines Kraftfahrzeuges 1 eingesetzt zu werden.

Die genannte zweite Ausführungsform unterscheidet sich jedoch von der beschriebenen ersten Ausführungsform im Wesentlichen durch die Tatsache, dass hier der Vorhang 230 in der geöffneten Position auf der beweglichen Aufhängung aufgenommen wird.

Nach einem in der genannten zweiten Ausführungsform verwendeten Erfindungsmerkmal ist der Einsatz des Vorhangs 230 von der Verschiebung der beweglichen Aufhängung unabhängig.

Bei dieser Art der Ausgestaltung ist der Vorhang 230 nicht in ständiger und gleichzeitiger Weise mit dem Oberteil der Windschutzscheibe und der beweglichen Aufhängung 220 verbunden, d.h. also, dass der sich zwischen der Oberkante der genannten Windschutzscheibe 10 und dem den Schirm 210 tragenden Teil der Sonnenblendschutzvorrichtung 200 erstreckende Raum nicht systematisch abgedeckt wird. Dies bedeutet auch, dass die Funktion des Vorhangs 230 in vollständig autonomer Weise und insbesondere unabhängig von der Verschiebung der beweglichen Aufhängung 220 erfolgt.

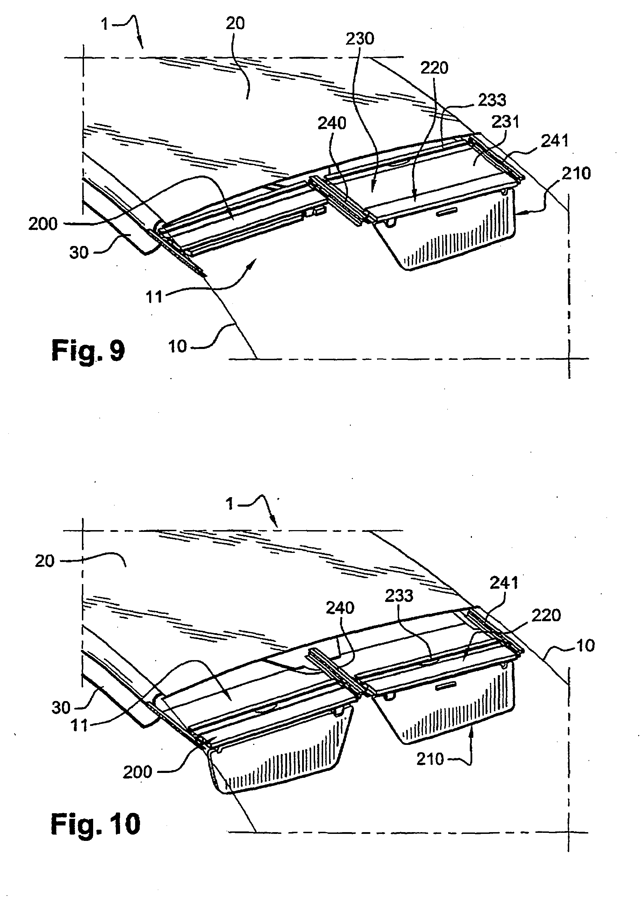

Entsprechend einem weiteren, bei der genannten zweiten Ausführungsform eingesetzten Erfindungsmerkmal ist die bewegliche Aufhängung 220 längs zweier Führungsschienen 240, 241 gleitend montiert, die, wie dies in den Figuren 9 bis 12 ersichtlich ist, dazu bestimmt sind, beiderseits des abzudunkelnden Teils 11 der Windschutzscheibe 10 angeordnet zu werden.

Bei diesem zweiten Ausführungsbeispiel besteht der Vorhang 230 aus einer Leinwand 231, deren beide gegenüberliegende Enden jeweils einerseits mit einem Aufrollrohr 232 fest verbunden sind, das in der Axialrotation in der Nähe des abzudunkelnden Teils 11 der Windschutzscheibe 10 beweglich montiert ist, und andererseits einer Zugstange 233, die für die Verschiebung längs des genannten abzudunkelnden Teils 11 beweglich montiert ist. Entsprechend erfolgt also das Ausfahren oder das Zusammenfalten des Vorhangs 230 durch gezieltes Einwirken auf die Zugstange 133 der Sonnenblendschutzvorrichtung 200, die hier von der beweglichen Aufhängung 220 vollständig getrennt ist.

Im Übrigen wird die Zugstange 233 vorzugsweise längs zweier Führungsschienen beweglich gleitend montiert, die dazu bestimmt sind, längs beiderseits des abzudunkelnden Teils 11 der Windschutzscheibe 10 montiert zu werden.

Bei diesem Ausführungsbeispiel werden die Zugstange 233 und die bewegliche Aufhängung 220 durch zwei völlig getrennte Werkstücke gebildet. Entsprechend erweist es sich als besonders vorteilhaft, dass die beiden Führungsschienen 240, 241, die das Gleiten der beweglichen Aufhängung 220 sicherstellen, die gleichen sind wie diejenigen, die für das Gleiten der Zugstange 233 sorgen.

Ebenso wie bei dem vorstehend beschriebenen ersten Ausführungsbeispiel ist der Vorhang 230 der genannten zweiten Ausführungsform von dem Typ, der eine Vielzahl von Positionen einnehmen kann.

Die Sonnenblendschutzvorrichtung 200 ist im Übrigen ebenfalls mit Mitteln 250 versehen, die in der Lage sind, die Verschiebung der Zugstange 233 mit der Axialrotation des Aufrollrohrs 232 zu koppeln, wenn die Leinwand 231 für die Verschiebung zwischen der geöffneten und der geschlossenen Position angetrieben wird.

Die genannten Kopplungsmittel 250 sind jedoch etwas anders ausgestaltet als ihre Entsprechungen der ersten Ausführungsform.

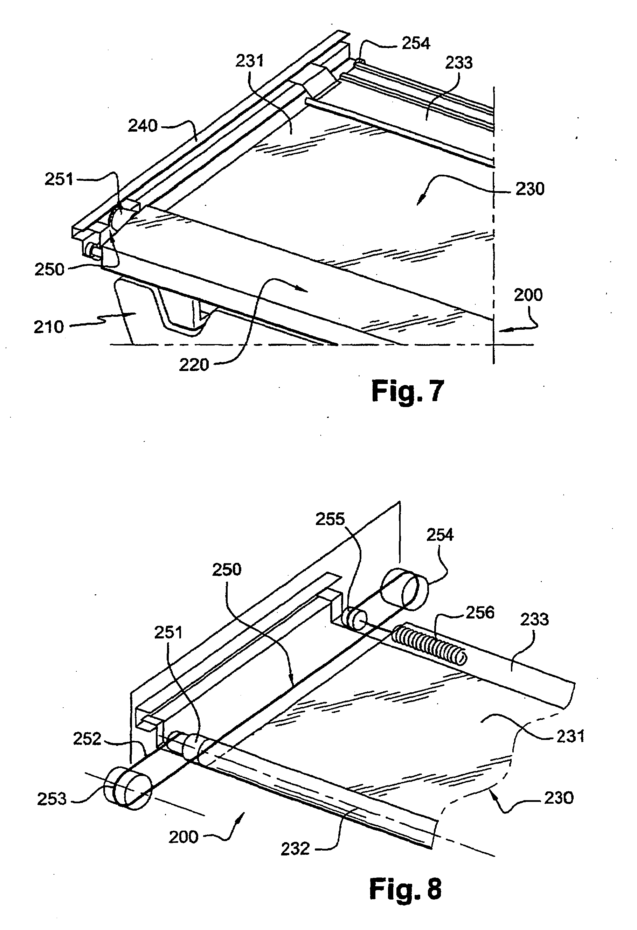

Wie insbesondere in Fig. 8 zu sehen ist, trägt jedes Ende des Aufrollrohres 232 eine kegelförmige Rolle 251, an der ein Antriebskabel 252 befestigt ist, das sich auf- oder abrollen kann und sich in der Richtung zum Vorderteil der Sonnenblendschutzvorrichtung 200 erstreckt. Jedes Antriebskabel 252 wird dann dank des Vorhandenseins einer ersten Umlenkrolle 253 nach hinten zurückgeführt, bevor es erneut über eine zweite Umlenkrolle 254 nach vorne umgelenkt wird. Das Antriebskabel 252 wird dann senkrecht über eine dritte Umlenkrolle 255 hin zu der Zugstange 233 gelenkt, an der es über eine Zugfeder 256 befestigt wird. Auch hier hat das genannte elastische Rückholmittel 156 die Aufgabe, eventuelle unterschiedliche Abmessungen in der Übertragungskette, die die Koppelung der Zugstange 233 und dem Aufrollrohr 232 für die Verschiebung sicherstellt, zu kompensieren; das Ziel ist auch hier wiederum, die Spannung der Leinwand 231 konstant zu halten.

Ebenso wie im Fall der ersten Ausführungsform der Erfindung sind auch hier die Kopplungsmittel 250 an sich nach dem Stand der Technik bekannt und werden hier weder strukturell noch funktionell näher beschrieben.

Natürlich existiert eine Vielzahl von Mechanismen, die in der Lage sind, die Koppelungsfunktion, wie sie vorstehend beschrieben wurde, zu erfüllen. Aus diesem Grund können sämtliche bekannten Kopplungsmittel 250 im Prinzip in äquivalenter Weise im Rahmen der Erfindung genutzt werden.

Für den Fall, dass der Vorhang 230 nicht von dem Typ ist, der eine Vielzahl von Positionen ermöglicht, kann eine Ausführungsvariante darin bestehen, die Sonnenblendschutzvorrichtung 200 mit Mitteln zur vorübergehenden Verbindung zu versehen, die in der Lage sind, das freie Ende des Vorhangs 230 mit mindestens einem Fixierungspunkt in trennbarer Weise zu verbinden.

Zwei unterschiedliche Ausgestaltungen sind dann grundsätzlich in Betracht zu ziehen.

Die erste entspricht dem Fall, bei dem vorgesehen ist, den Vorhang im Bereich eines ortsfesten Teils der Sonnenblendschutzvorrichtung 200 aufzunehmen. Ein Befestigungspunkt kann dann vorteilhafterweise an der beweglichen Aufhängung 220 angeordnet werden.

Die zweite Ausgestaltung entspricht der Situation, in der das Ganze in der Weise ausgestaltet ist, dass die Aufnahme des Vorhangs 230 im Bereich der beweglichen Aufhängung 220 erfolgt. Die Sonnenblendschutzvorrichtung 200 kann dann vorteilhafterweise an einem ortsfesten Teil der Sonnenblendschutzvorrichtung einen Befestigungspunkt und insbesondere den Aufnahmebereich aufweisen.

Die Figuren 9 bis 12 zeigen verschiedene Beispiele der Ausgestaltung, die erhalten werden können, indem im Innenraum eines Kraftfahrzeuges 1 zwei Sonnenblendschutzvorrichtungen 200 nach der vorstehenden Beschreibung eingesetzt werden.

In Fig. 9 wird die rechte Sonnenblendschutzvorrichtung 200 (vom Inneren des Fahrgastraums aus gesehen) als vollständig gefaltet dargestellt, während die linke als vollständig ausgefahren dargestellt wird.

Fig. 10 zeigt die beiden Sonnenblendschutzvorrichtung 200 im gleichen Zustand, d.h. also mit beiden Vorhängen 230 in geöffneter Position und beiden Schirmen 210 in zusammengefalteter Position.

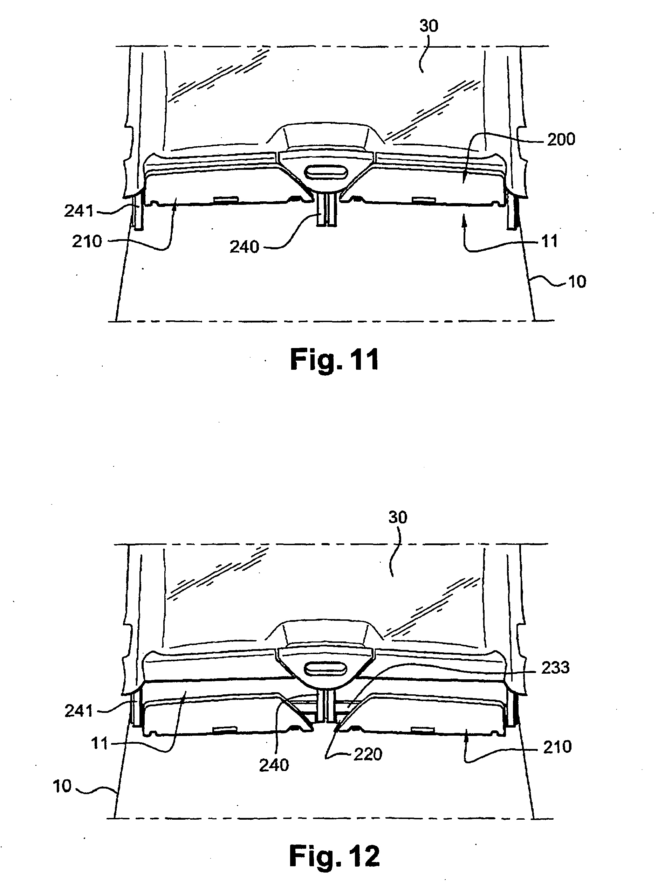

In Fig. 11 werden die beiden Sonnenblendschutzvorrichtungen 200 ebenfalls in einem identischen Zustand dargestellt, d.h. also vollständig zusammengefaltet.

Fig. 12 zeigt schließlich ein weiteres Beispiel der Ausgestaltung, bei dem die beiden Vorhänge 230 in der geöffneten Position befindlich sind, und die beiden Schirme 210 in der zusammengefalteten Position.

Selbstverständlich betrifft die Erfindung allgemein jedes Kraftfahrzeug, das wie vorstehend beschrieben mit mindestens einer Sonnenblendschutzvorrichtung 100, 200 ausgestattet ist.

## Patentansprüche

1. Sonnenblendschutzvorrichtung (100, 200), die dazu bestimmt ist, im oberen Teil einer Windschutzscheibe (10) eines Kraftfahrzeuges (1) montiert zu werden, **dadurch gekennzeichnet, dass** sie mit einem Schirm (110) versehen ist, der an einer Aufhängung (120, 220) angelenkt ist, die für die Verschiebung längs der Windschutzscheibe (10) beweglich montiert ist, sowie einem Vorhang (130, 230), der unterhalb eines Teils (11) der Windschutzscheibe (10) ausgefahren werden kann, der sich zwischen der beweglichen Aufhängung (120, 220) und der Oberkante der genannten Windschutzscheibe (10) erstreckt.

2. Sonnenblendschutzvorrichtung (100, 200) nach Anspruch 1, **dadurch gekennzeichnet, dass** der Vorhang (130) für die Verschiebung zwischen einer offenen Position, in der er in der Nähe des abzudunkelnden Teils (11) der Windschutzscheibe (10) aufgenommen wird, und einer geschlossenen Position, in der er sich unterhalb des genannten abzudunkelnden Teils (11) erstreckt, beweglich montiert ist.

3. Sonnenblendschutzvorrichtung (100, 200) nach Anspruch 2, **dadurch gekennzeichnet, dass** der Vorhang (130) in der offenen Position im Bereich eines festen Teils der Sonnenblendschutzvorrichtung (100), der einen Aufnahmebereich bildet, aufgenommen wird.

4. Sonnenblendschutzvorrichtung (100) nach Anspruch 3, **dadurch gekennzeichnet, dass** der Aufnahmebereich dazu bestimmt ist, in der Nähe der Oberkante der Windschutzscheibe (10) positioniert zu werden.

5. Sonnenblendschutzvorrichtung (200) nach Anspruch 2, **dadurch gekennzeichnet, dass** der Vorhang (230) in der offenen Position im Bereich der beweglichen Aufhängung (220) aufgenommen wird.

6. Sonnenblendschutzvorrichtung (100) nach einem der Ansprüche 1 bis 5, **dadurch gekennzeichnet, dass** der Einsatz des Vorhangs (130) mit der Verschiebung der beweglichen Aufhängung (120) verbunden ist.

7. Sonnenblendschutzvorrichtung (100) nach Anspruch 6, **dadurch gekennzeichnet, dass** der Vorhang (130) im Bereich eines festen Teils der genannten Sonnenblendschutzvorrichtung (100) aufgenommen wird, wobei ein Ende des genannten Vorhangs (130) außerdem mit der beweglichen Aufhängung (120) fest verbunden ist.

8. Sonnenblendschutzvorrichtung (100) nach Anspruch 6, **dadurch gekennzeichnet, dass** der Vorhang (130) im Bereich der beweglichen Aufhängung (120) aufgenommen wird, wobei ein Ende des genannten Vorhangs (130) außerdem mit einem festen Teil der genannten Sonnenblendschutzvorrichtung (100) fest verbunden ist.

9. Sonnenblendschutzvorrichtung (200) nach einem der Ansprüche 1 bis 5, **dadurch gekennzeichnet, dass** der Einsatz des Vorhangs (230) von der Verschiebung der beweglichen Aufhängung (220) unabhängig ist.

10. Sonnenblendschutzvorrichtung (200) nach Anspruch 9, **dadurch gekennzeichnet, dass** der Vorhang (230) von dem Typ ist, der mehrere Positionen einnehmen kann.

11. Sonnenblendschutzvorrichtung (200) nach Anspruch 9, **dadurch gekennzeichnet, dass** sie des Weiteren mit Mitteln zur vorübergehenden Verbindung versehen ist, die in der Lage sind, das freie Ende des genannten Vorhangs (230) mit mindestens einem Fixierungspunkt in trennbarer Weise zu verbinden.

12. Sonnenblendschutzvorrichtung (100, 200) nach einem der Ansprüche 1 bis 11, **dadurch gekennzeichnet, dass** die bewegliche Aufhängung (120, 220) längs zweier Führungsschienen (140, 141, 240, 241) gleiten montiert ist, die dazu bestimmt sind, beiderseits des abzudunkelnden Teils (11) der Windschutzscheibe (10) angeordnet zu werden.

13. Sonnenblendschutzvorrichtung (100, 200) nach einem der Ansprüche 1 bis 12, **dadurch gekennzeichnet, dass** der Vorhang (130, 230) eine Leinwand (131, 231) aufweist, von der zwei gegenüberliegende Enden jeweils einerseits mit einem Aufrollrohr (132, 232) fest verbunden sind, das in der Axialrotation in der Nähe des abzudunkelnden Teils (11) der Windschutzscheibe (10) beweglich montiert ist, und andererseits einer Zugstange (133, 233), die für die Verschiebung längs des genannten abzudunkelnden Teils (11) der Windschutzscheibe (10) beweglich montiert ist.

14. Sonnenblendschutzvorrichtung (100, 200) nach Anspruch 13, **dadurch gekennzeichnet, dass** die Zugstange (133, 233) längs zweier Führungsschienen (140, 141, 240, 241) beweglich gleitend montiert ist, die dazu bestimmt sind, beiderseits des abzudunkelnden Teils (11) der Windschutzscheibe (10) montiert zu werden.

15. Sonnenblendschutzvorrichtung (100, 200) nach einem der Ansprüche 1 bis 14, **dadurch gekennzeichnet, dass** der Schirm (110) für das Schwenken nach einerseits einer ersten, im Wesentlichen zur beweglichen Aufhängung (120, 220) parallelen Achse und andererseits einer zweiten, im Wesentlichen zur genannten ersten Schwenkachse senkrechten Weise beweglich montiert ist.

16. Kraftfahrzeug, **dadurch gekennzeichnet, dass** es mit mindestens einer Sonnenblendschutzvorrichtung (100, 200) nach einem der vorstehenden Ansprüche ausgestattet ist.

## Claims

1. Anti-dazzle sun visor (100, 200) which is intended to be mounted in the upper part of a windshield (10) of a motor vehicle (1), **characterized in that** it is provided with a screen (110) which is articulated to a suspension device (120, 220) which is movably mounted for displacement along the windshield (10), as well as a blind (130, 230) which may be extended below a part (11) of the windshield (10), which extends between the movable suspension device (120, 220) and the upper edge of the aforementioned windshield (10).

2. Anti-dazzle sun visor (100, 200) according to Claim 1, **characterized in that** the blind (130) is movably mounted for displacement between an open position in which it is received in the vicinity of the part (11) to be blacked out of the windshield (10) and a closed position, in which it extends below the aforementioned part (11) to be blacked out.

3. Anti-dazzle sun visor (100, 200) according to Claim 2, **characterized in that** the blind (130) in the open position is received in the region of a fixed part of the anti-dazzle sun visor (100) which forms a receiver region.

4. Anti-dazzle sun visor (100) according to Claim 3, **characterized in that** the receiver region is intended to be positioned in the vicinity of the upper edge of the windshield (10).

5. Anti-dazzle sun visor (200) according to Claim 2, **characterized in that** the blind (230) is received in the open position in the region of the movable suspension device (220).

6. Anti-dazzle sun visor (100) according to one of Claims 1 to 5, **characterized in that** the use of the blind (130) is associated with the displacement of the movable suspension device (120).

7. Anti-dazzle sun visor (100) according to claim 6, **characterized in that** the blind (130) is received in the region of a fixed part of the aforementioned anti-dazzle sun visor (100), one end of the aforementioned blind (130) being moreover fixedly connected to the movable suspension device (120).

8. The anti-dazzle sun visor (100) according to Claim 6, **characterized in that** the blind (130) is received in the region of the movable suspension device (120), one end of the aforementioned blind (130) moreover being fixedly connected to a fixed part of the aforementioned anti-dazzle sun visor (100).

9. Anti-dazzle sun visor (200) according to one of Claims 1 to 5, **characterized in that** the use of the blind (230) is independent of the displacement of the movable suspension device (220).

10. Anti-dazzle sun visor (200) according to Claim 9, **characterized in that** the blind (230) is of the type which may adopt a plurality of positions.

11. Anti-dazzle sun visor (200) according to Claim 9, **characterized in that** it is moreover provided with means for the temporary connection which are able to connect the free end of the aforementioned blind (230) to at least one fixing point in a disconnectable manner.

12. Anti-dazzle sun visor (100, 200) according to one of Claims 1 to 11, **characterized in that** the movable suspension device (120, 220) is slidably mounted along two guide rails (140, 141, 240, 241) which are intended to be arranged on both sides of the part (11) to be blacked out of the windshield (10).

13. Anti-dazzle sun visor (100, 200) according to one of Claims 1 to 12, **characterized in that** the blind (130, 230) comprises a canvas (131, 231), the two opposing ends thereof being respectively fixedly connected, on the one hand, to a rolling tube (132, 232), which is movably mounted in axial rotation in the vicinity of the part (11) to be blacked out of the windshield (10) and, on the other hand, a drawbar (133, 233) which is movably mounted for displacement along the aforementioned part (11) to be blacked out of the windshield (10).

14. Anti-dazzle sun visor (100, 200) according to Claim 13, **characterized in that** the drawbar (133, 233) is movably and slidably mounted along two guide rails (140, 141, 240, 241), which are intended to be mounted on both sides of the part (11) to be blacked out of the windshield (10).

15. Anti-dazzle sun visor (100, 200) according to one of Claims 1 to 14, **characterized in that** the screen (110) is movably mounted for pivoting, on the one hand, according to a first axis substantially parallel to the movable suspension device (120, 220) and, on the other hand, in a second manner substantially perpendicular to the aforementioned first pivot axis.

16. Motor vehicle **characterized in that** it is provided with at least one anti-dazzle sun visor (100, 200) according to one of the preceding claims.

## Revendications

1. Dispositif de protection pare-soleil (100, 200) prévu pour être monté dans la partie supérieure d'un pare-brise (10) d'un véhicule automobile (1),
**caractérisé en ce qu'**il est pourvu d'un écran (110) qui est articulé à une partie suspendue (120, 220) qui est montée mobile de manière à coulisser le long du pare-brise (10), ainsi qu'un rideau (130, 230), qui peut être déployé sous une partie (11) du pare-brise (10), qui s'étend entre la partie suspendue mobile (120, 220) et le bord supérieur dudit pare-brise (10).

2. Dispositif de protection pare-soleil (100, 200) selon la revendication 1, **caractérisé en ce que** le rideau (130) est monté mobile de manière à pouvoir coulisser entre une position ouverte dans laquelle il est reçu à proximité de la partie à assombrir (11) du pare-brise (10) et une position fermée dans laquelle il s'étend sous ladite partie à assombrir (11).

3. Dispositif de protection pare-soleil (100, 200) selon la revendication 2, **caractérisé en ce que** le rideau (130) est reçu dans la position ouverte dans la région d'une partie fixe du dispositif de protection pare-soleil (100), qui forme une région de réception.

4. Dispositif de protection pare-soleil (100) selon la revendication 3, **caractérisé en ce que** la région de réception est prévue pour être positionnée à proximité du bord supérieur du pare-brise (10).

5. Dispositif de protection pare-soleil (200) selon la revendication 2, **caractérisé en ce que** le rideau (230) est reçu dans la position ouverte dans la région de la partie suspendue mobile (220).

6. Dispositif de protection pare-soleil (100) selon l'une quelconque des revendications 1 à 5, **caractérisé en ce que** l'utilisation du rideau (130) est associée au coulissement de la partie suspendue mobile (120).

7. Dispositif de protection pare-soleil (100) selon la revendication 6, **caractérisé en ce que** le rideau (130) est reçu dans la région d'une partie fixe dudit dispositif de protection pare-soleil (100), une extrémité dudit rideau (130) étant en outre connectée fixement à la partie suspendue mobile (120).

8. Dispositif de protection pare-soleil (100) selon la revendication 6, **caractérisé en ce que** le rideau (130) est reçu dans la région de la partie suspendue mobile (120), une extrémité dudit rideau (130) étant en outre connectée fixement à une partie fixe dudit dispositif de protection pare-soleil (100).

9. Dispositif de protection pare-soleil (200) selon l'une quelconque des revendications 1 à 5, **caractérisé en ce que** l'utilisation du rideau (230) est indépendante du coulissement de la partie suspendue mobile (220).

10. Dispositif de protection pare-soleil (200) selon la revendication 9, **caractérisé en ce que** le rideau (230) est du type qui peut adopter plusieurs positions.

11. Dispositif de protection pare-soleil (200) selon la revendication 9, **caractérisé en ce qu'**il est en outre pourvu de moyens pour la connexion temporaire, qui sont en mesure de connecter, de manière séparable, l'extrémité libre dudit rideau (230) à au moins un point de fixation.

12. Dispositif de protection pare-soleil (100, 200) selon l'une quelconque des revendications 1 à 11,
**caractérisé en ce que** la partie suspendue mobile (120, 220) est montée de manière à glisser le long de deux rails de guidage (140, 141, 240, 241), qui sont prévus pour être disposés de part et d'autre de la partie à assombrir (11) du pare-brise (10).

13. Dispositif de protection pare-soleil (100, 200) selon l'une quelconque des revendications 1 à 12,
**caractérisé en ce que** le rideau (130, 230) présente une toile (131, 231), dont deux extrémités opposées sont connectées fixement à chaque fois d'une part à un rouleau d'enroulement (132, 232), qui est monté mobile en rotation axiale à proximité de la partie à assombrir (11) du pare-brise (10), et d'autre part à une tige de traction (133, 233) qui est montée mobile en vue du coulissement le long de ladite partie à assombrir (11) du pare-brise (10).

14. Dispositif de protection pare-soleil (100, 200) selon la revendication 13, **caractérisé en ce que** la tige de traction (133, 233) est montée mobile de manière à glisser le long de deux rails de guidage (140, 141, 240, 241), qui sont prévus pour être montés de part et d'autre de la partie à assombrir (11) du pare-brise (10).

15. Dispositif de protection pare-soleil (100, 200) selon l'une quelconque des revendications 1 à 14,
**caractérisé en ce que** l'écran (110) est monté mobile en vue de pivoter d'une part vers un premier axe essentiellement parallèle à la partie suspendue mobile (120, 220) et d'autre part d'une deuxième manière, essentiellement perpendiculaire audit premier axe de pivotement.

16. Véhicule automobile, **caractérisé en ce qu'**il est muni d'au moins un dispositif de protection pare-soleil (100, 200) selon l'une quelconque des revendications précédentes.
